# EUROPÄISCHE PATENTSCHRIFT

(11) **EP 2 962 021 B1**
(45) Veröffentlichungstag und Bekanntmachung des Hinweises auf die Patenterteilung: **02.08.2017**
(21) Anmeldenummer: 13780075.1
(22) Anmeldetag: 13.09.2013
(51) Int. Cl.: F16K 11/078

(54) **EINHANDHEBELKARTUSCHE**
ONE-HAND LEVER CARTRIDGE
CARTOUCHE DE MITIGEUR

(43) Veröffentlichungstag der Anmeldung: 06.01.2016
(73) Patentinhaber: Flühs Drehtechnik GmbH, D-58515 Lüdenscheid (DE)
(72) Erfinder: LANGE, Lutz, 58511 Lüdenscheid (DE)
(74) Vertreter: Patentanwälte Dörner & Kötter PartG mbB
(86) Internationale Anmeldenummer: PCT/EP2013/069054
(87) Internationale Veröffentlichungsnummer: WO 2015/036042

(56) Entgegenhaltungen:
- DE-A1- 3 531 932
- DE-A1- 4 319 921

## Beschreibung

Die Erfindung betrifft eine Einhandhebelkartusche, umfassend ein Kopfstück, das ein Bodenstück aufnimmt, sowie eine Scheibensteuerung mit einer Steuerscheibe, welche über eine drehbar und/oder schwenkbar gelagerte Spindel drehbar/verschiebbar angeordnet ist, wobei die Spindelaufnahme aus einem von dem Kopfstück verschiedenen Material hergestellt ist und eine Durchführung für die Spindel aufweist.

In Sanitärarmaturen werden häufig als Mischerkartuschen ausgeführte Einhandhebelkartuschen eingesetzt, in denen eine eine Steuerscheibe sowie eine Durchlasscheibe aufweisende Scheibensteuerung angeordnet ist, welche über einen einzigen Hebel derart bedienbar ist, dass sowohl die Wassermenge als auch die Wassertemperatur über ein und denselben Hebel steuerbar ist (vgl. bspw. DE 35 31 932 A1). Dabei sind Kopfstück und Spindel oftmals aus Metall, insbesondere aus Messing hergestellt, während die Spindelaufnahme als Kunststoffspritzgussteil hergestellt ist. Bei einer drehbar und schwenkbar gelagerten Spindel ist die Spindel in der Spindelaufnahme über eine Achse schwenkbar gelagert, wobei die Spindelaufnahme in dem Kopfstück drehbar gelagert ist. Eine derartige Einhandhebelkartusche ist beispielsweise in der WO2014/131471 A1 beschrieben. Bei großen Temperaturschwankungen, wie sie bereits bei dem abwechselnden Durchlauf von Heiß- und Kaltwasser auftreten, kann es zwischen der aus Kunststoff hergestellten Spindelaufnahme einerseits und der aus Metall hergestellten Spindel beziehungsweise dem aus Metall hergestellten Kopfstück andererseits aufgrund der unterschiedlichen Temperaturausdehnungskoeffizienten der Werkstoffe zu Spannungen zwischen den Bauteilen kommen, was zu einer Schwergängigkeit der Kartusche führen kann. Zudem kann es durch eine Verspannung der Spindelaufnahme mit der diese haltenden Befestigungsmutter zu einem Mitnahmeeffekt bei Drehung des Bedienhebels kommen, was ein ungewolltes Lösen dieser Mutter zur Folge haben kann.

Hier will die Erfindung Abhilfe schaffen. Der Erfindung liegt die Aufgabe zugrunde, eine Einhandhebelkartusche bereitzustellen, bei der auch bei hohen Temperaturdifferenzen Spannungen zwischen den Bauteilen vermieden sind, wodurch eine gleichbleibende Bedienbarkeit und Haptik gewährleistet ist. Gemäß der Erfindung wird diese Aufgabe durch eine Einhandhebelkartusche mit den Merkmalen des kennzeichnenden Teils des Patentanspruchs 1 gelöst.

Mit der Erfindung ist eine Einhandhebelkartusche geschaffen, bei der auch bei großen Temperaturunterschieden eine Verspannung zwischen den Bauteilen vermieden ist, wodurch eine gleichbleibende Bedienbarkeit und Haptik gewährleistet ist.

Dadurch, dass in die Spindelaufnahme im Bereich der Durchführung wenigstens ein Schlitz eingebracht ist, wodurch die Innenkontur der Durchführung in einem endseitigen Abschnitt der Spindelaufnahme unterbrochen ist, ist ein Freiraum für sich ausdehnendes Material geschaffen, wodurch der Effekt einer Dehnungsfuge erzielt ist. Bevorzugt sind wenigstens zwei Schlitze angeordnet. Einer Verspannung zwischen der Spindelaufnahme und der Spindel beziehungsweise dem Kopfstück ist so auch bei großen Temperaturdifferenzen entgegengewirkt.

In Weiterbildung der Erfindung ist die Spindel über eine Achse mit der Spindelaufnahme verbunden, wobei der wenigstens eine Schlitz nicht über eine durch diese Achse geführte gedachte horizontale Ebene hinausgeht. Hierdurch ist eine hohe Stabilität der Spindel bei gleichzeitiger Gewährleistung der Schwenkbarkeit der Spindel in der Spindelaufnahme erzielt.

Gemäß der Erfindung weist die Durchführung zumindest an dem der Steuerscheibe abgewandten Ende der Spindelaufnahme einen rechteckigen Querschnitt auf, wobei die Innenkontur des rechteckigen Querschnitts der Durchführung bereichsweise durch drei bevorzugt in regelmäßigen Abständen angeordnete Schlitze unterbrochen ist. Hierdurch ist ein gleichmäßig verteilter Raum zur Aufnahme von Materialausdehnungen bereitgestellt. Bevorzugt mündet an wenigstens zwei Ecken des rechteckigen Querschnitts der Durchführung jeweils ein Schlitz, wobei vorteilhaft wenigstens ein Schlitz mittig durch eine Seitenwand des rechteckigen Querschnitts der Durchführung in diese mündet.

In weiterer Ausgestaltung der Erfindung ist an der Spindelaufnahme an ihrem der Steuerscheibe zugewandten Ende ein zweistufiger Absatz angeformt, wobei vorteilhaft oberhalb des endseitigen, ersten Absatzes der zu diesem durchmesserverminderte zweiten Absatz im Bereich der beiden Längsseitenwände des rechteckigen Querschnitts der Durchführung axial schräg nach oben zulaufend ausgebildet ist. Hierdurch ist ein zusätzlicher Raum zwischen der Spindelaufnahme und dem Kopfstück zur Aufnahme von Materialausdehnungen bereitgestellt. Dabei ist der zweite Absatz im Bereich der beiden Querseitenwände des rechteckigen Querschnitts der Durchführung unvermindert beibehalten, wodurch die Durchführung in dem Kopfstück in Schwenkrichtung der Spindel vollständig anliegt. Ungewollte Toleranzen, die zu einem Wackeln bei der Bedienung der Spindel führen können, sind so vermieden. Hierdurch ist eine gute Haptik der Einhandhebelkartusche gewährleistet.

In weiterer Ausgestaltung der Erfindung ist auf dem endseitigen ersten Absatz ein Gleitring mit polygonaler Außenkontur angeordnet, dessen Außendurchmesser gegenüber dem endseitigen ersten Absatz vergrößert ausgebildet ist. Hierdurch ist eine geringfügige Reduzierung des Durchmessers des endseitigen ersten Absatzes ermöglicht, wodurch zwischen diesem ersten Absatz und dem Kopfstück ein weiterer Raum zur Aufnahme von Materialausdehnungen geschaffen ist. Die über den Außendurchmesser des ersten Absatzes überstehenden Ecken der polygonalen Außenkontur des Gleitrings bewirken eine Stabilisierung der Spindelaufnahme in dem Kopfstück, wodurch ein wahrnehmbarer Wackeleffekt bei der Bedienung der Einhandhebelkartusche vermieden ist. Eine gleichmäßig gute Haptik des Bedienhebels bei Betätigung der Einhandhebelkartusche ist so gewährleistet.

In Weiterbildung der Erfindung weist das Kopfstück an seinem dem Bodenstück entgegengesetzten Ende einen durchmesserreduzierten Abschnitt auf, in dem diametral gegenüberliegend zwei radiale Langlöcher eingebracht sind, in welche die Achse eingreift. Der durchmesserreduzierte Abschnitt nimmt den Befestigungsring auf, der so von der Spindelaufnahme entkoppelt ist, wodurch eine ungewollte Mitnahme des Befestigungsrings beim Drehen der Spindelaufnahme bei Betätigung der Einhandhebelkartusche vermieden ist.

In Weiterbildung der Erfindung sind zwischen den Langlöchern zwei radial umlaufende Stege angeordnet, die bevorzugt einen gegenüber dem durchmessereduzierten Abschnitt vergrößert ausgebildeten Durchmesser aufweisen. Vorteilhaft ist auf den Stegen jeweils wenigstens eine Rastnase zur verliersicheren Aufnahme eines Befestigungsrings angeordnet. Hierdurch ist eine gute Beweglichkeit des Befestigungsrings bei gleichzeitiger verliersicheren Halterung erzielt. Bevorzugt ist die Rastnase durch eine radial verlaufende, einen Hinterschnitt ausbildende Rastkante gebildet.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

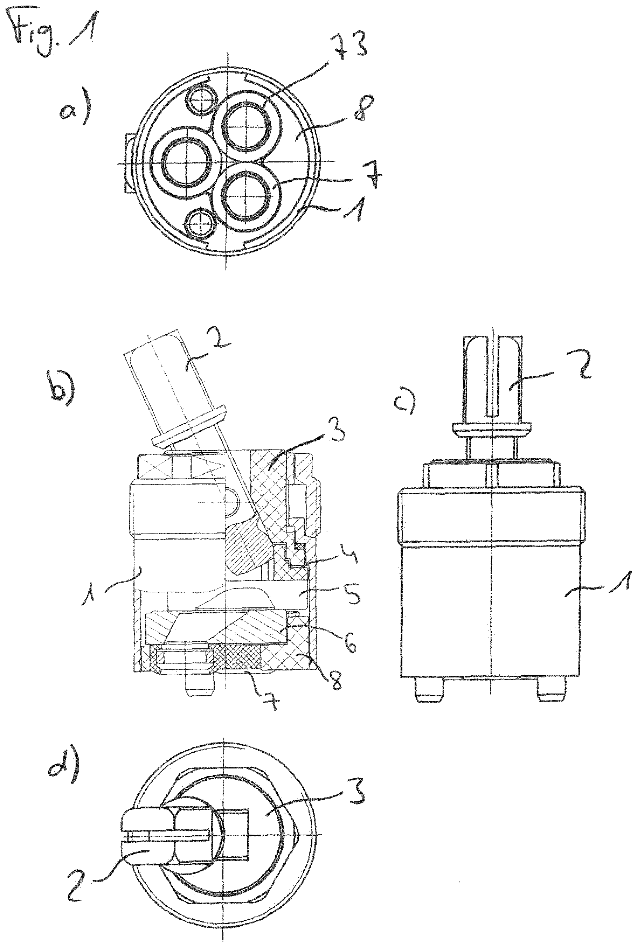

- Figur 1: die schematische Darstellung einer Einhandhebelmischerkartusche
a) in der Ansicht von unten;
b) im Teillängsschnitt;
c) in der Seitenansicht;
d) in der Draufsicht;

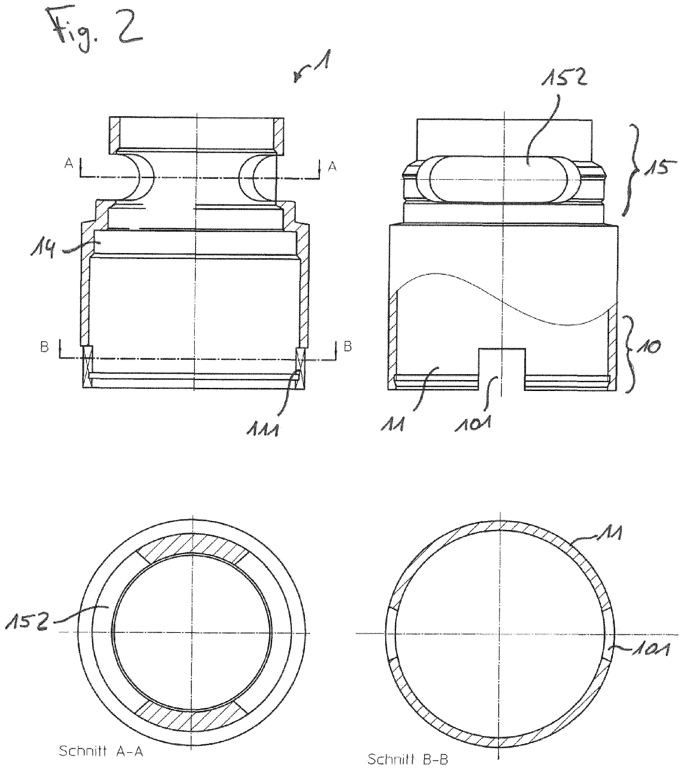

- Figur 2: die schematische Darstellung des Kopfstücks der Mischerkartusche aus Figur 1
a) im Längsschnitt;
b) im Teilschnitt in um 90° gedrehter Seitenansicht;
c) im Querschnitt (Schnitt A-A);
d) im Querschnitt (Schnitt B-B);

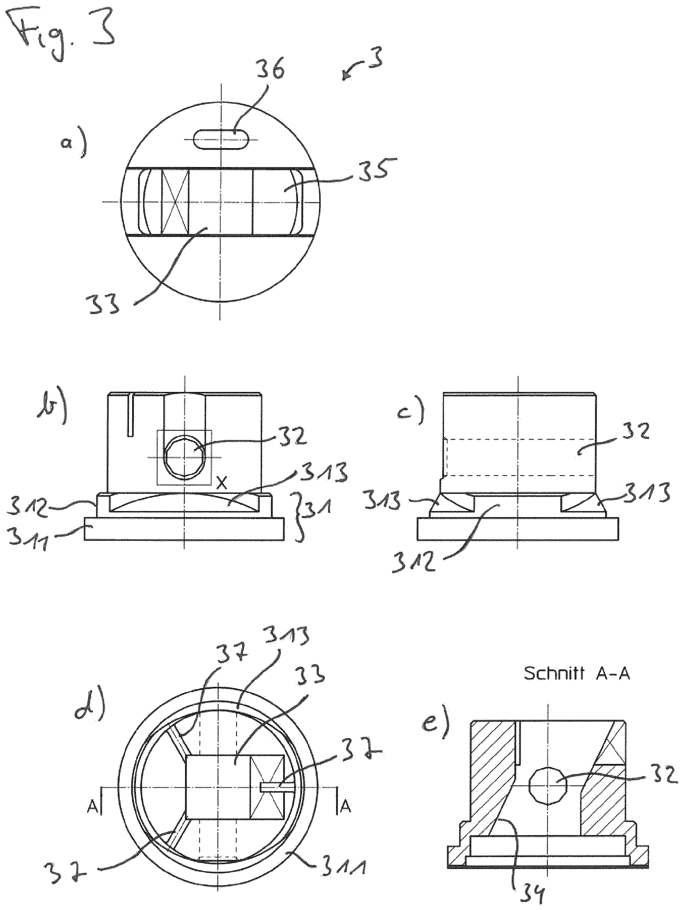

- Figur 3: die schematische Darstellung der Spindelaufnahme der Mischerkartusche aus Figur 1
a) in der Ansicht von unten;
b) in der Seitenansicht;
c) in einer um 90° verdrehten Seitenansicht;
d) in der Draufsicht;
e) im Längsschnitt (Schnitt A-A);

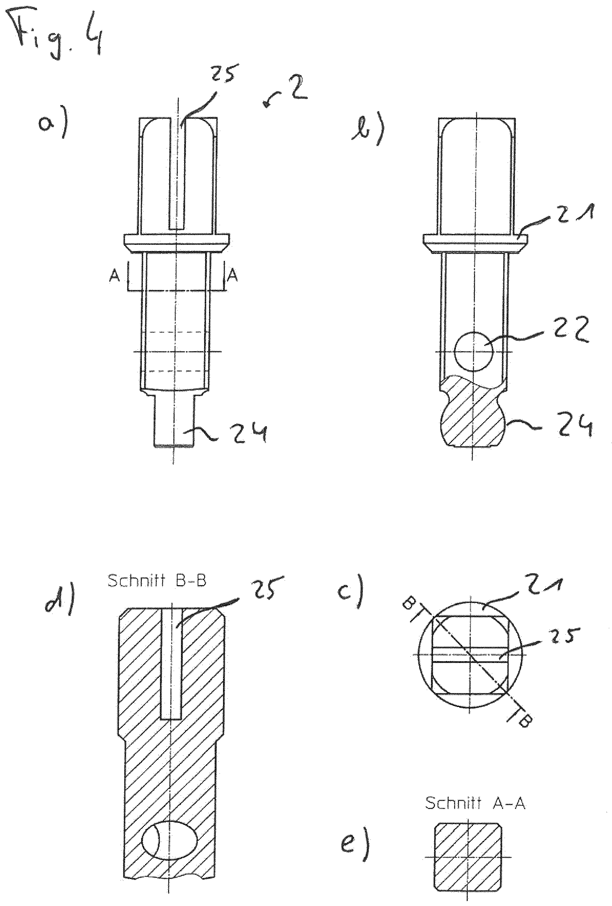

- Figur 4: die Spindel der Mischerkartusche aus Figur 1
a) in der Seitenansicht;
b) im Teilschnitt in um 90° gedrehter Seitenansicht;
c) in der Draufsicht;
d) im Längsschnitt (Schnitt B-B);
e) im Querschnitt (Schnitt A-A);

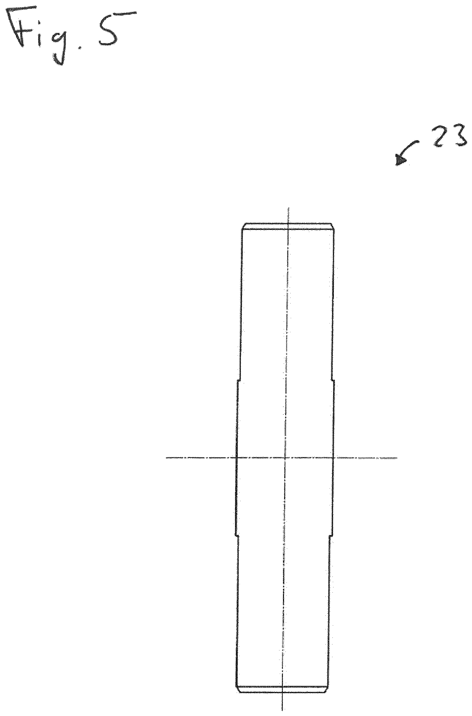

- Figur 5: die Schwenkachse der Spindel der Mischerkartusche aus Figur 1;

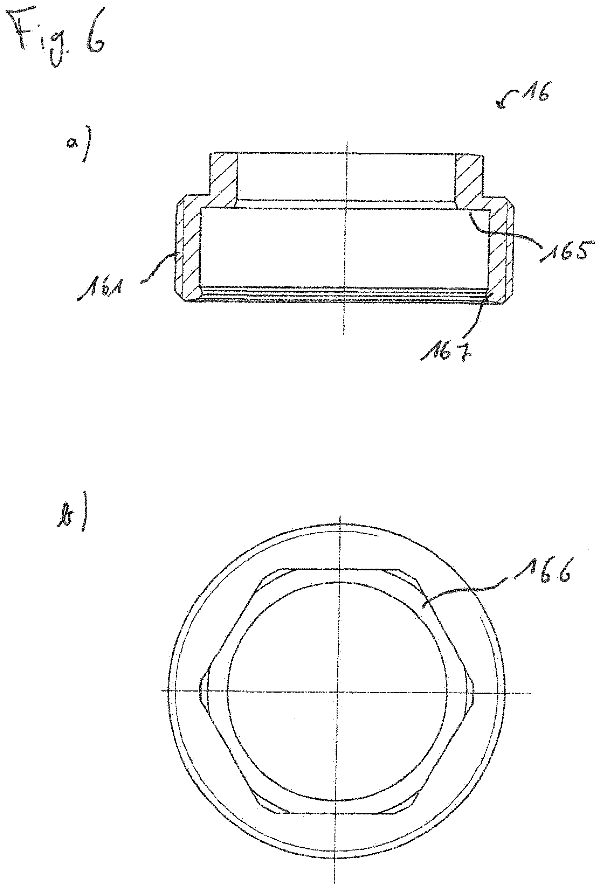

- Figur 6: den Befestigungsring der Mischerkartusche aus Figur 1
a) im Längsschnitt;
b) in der Draufsicht;

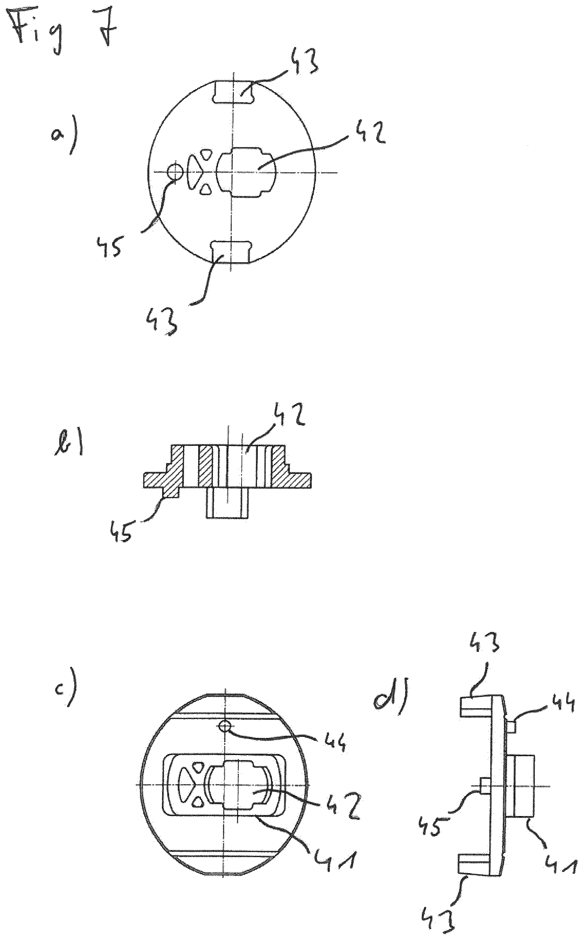

- Figur 7: die schematische Darstellung des Gleitstücks der Mischerkartusche aus Figur 1
a) in der Ansicht von unten ;
b) im Querschnitt ;
c) in der Draufsicht;
d) in der Seitenansicht;

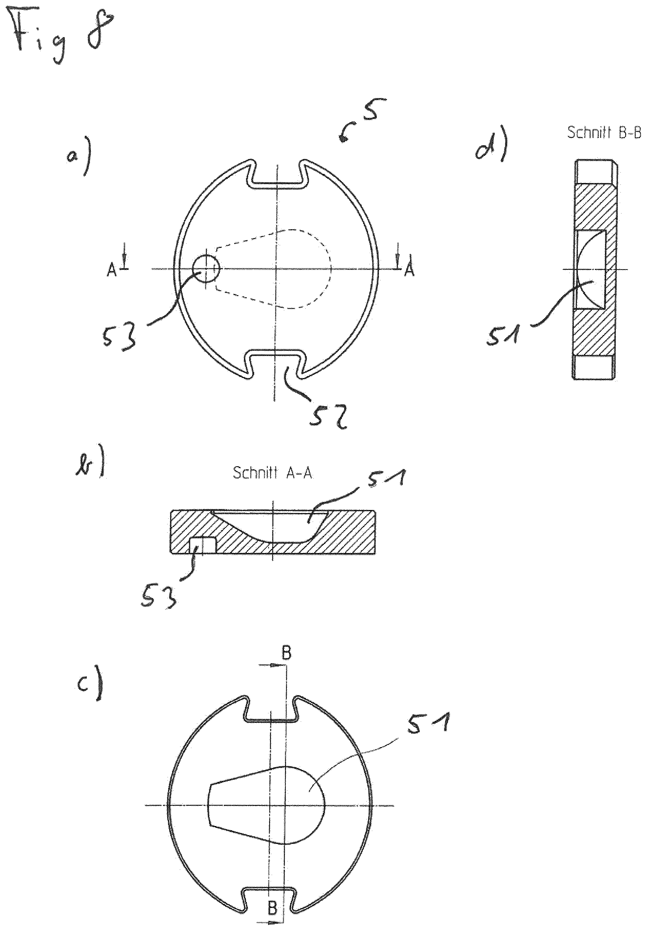

- Figur 8: die Darstellung der Steuerscheibe der Mischerkartusche aus Figur 1
a) in der Ansicht von unten;
b) im Querschnitt (Schnitt A-A);
c) in der Draufsicht;
d) im Querschnitt (Schnitt B-B);

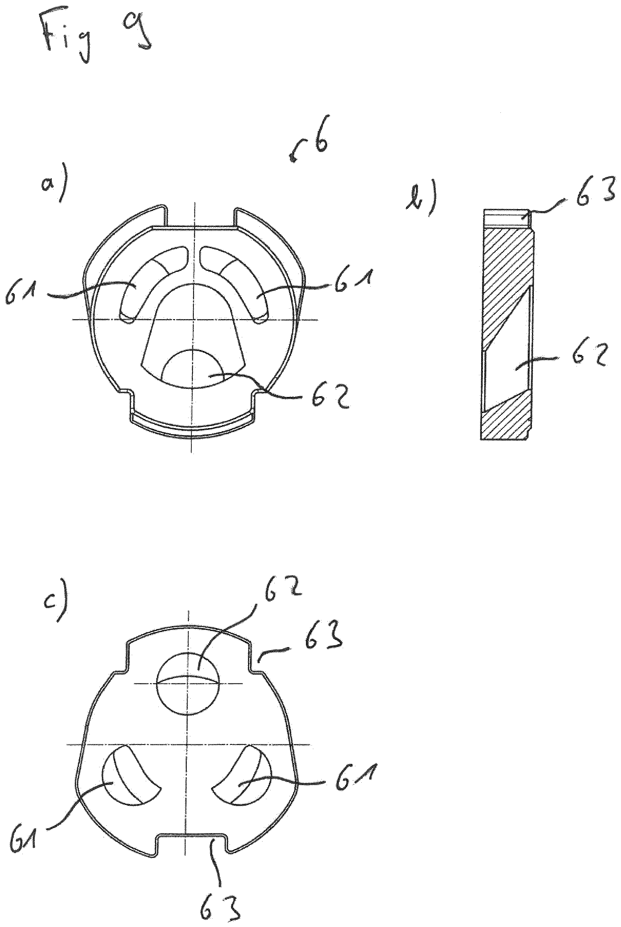

- Figur 9: die Darstellung der Durchlassscheibe der Mischerkartusche aus Figur 1
a) in der Ansicht von unten;
b) im Querschnitt;
c) in der Draufsicht;

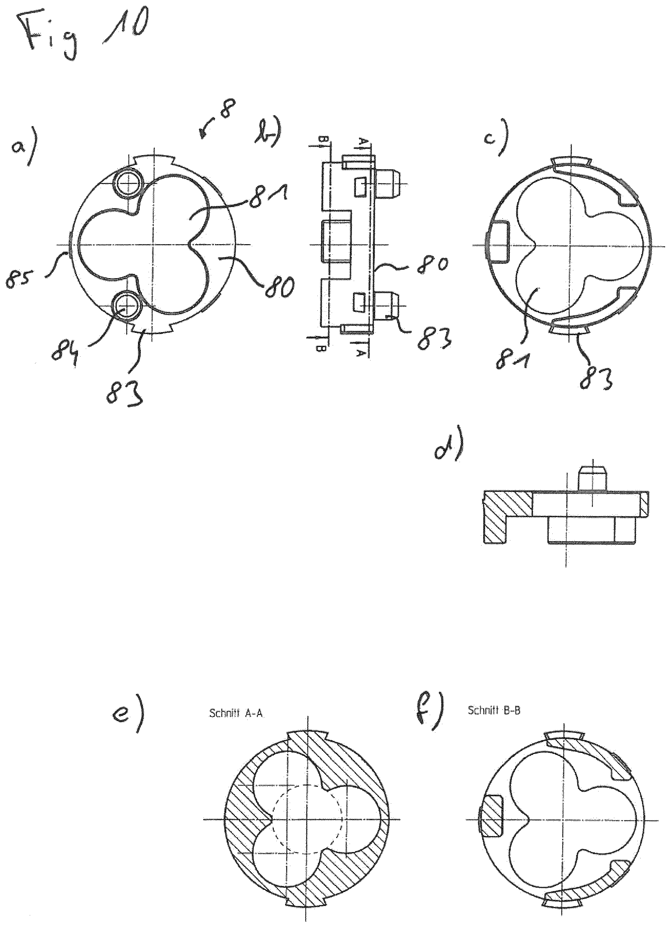

- Figur 10: die Darstellung des Bodenstücks des Mischerkartusche aus Figur 1
a) in der Ansicht von unten;
b) in der Seitenansicht;
c) in der Draufsicht;
d) im Teilschnitt;
e) im Querschnitt (Schnitt A-A);
f) im Querschnitt (Schnitt B-B);

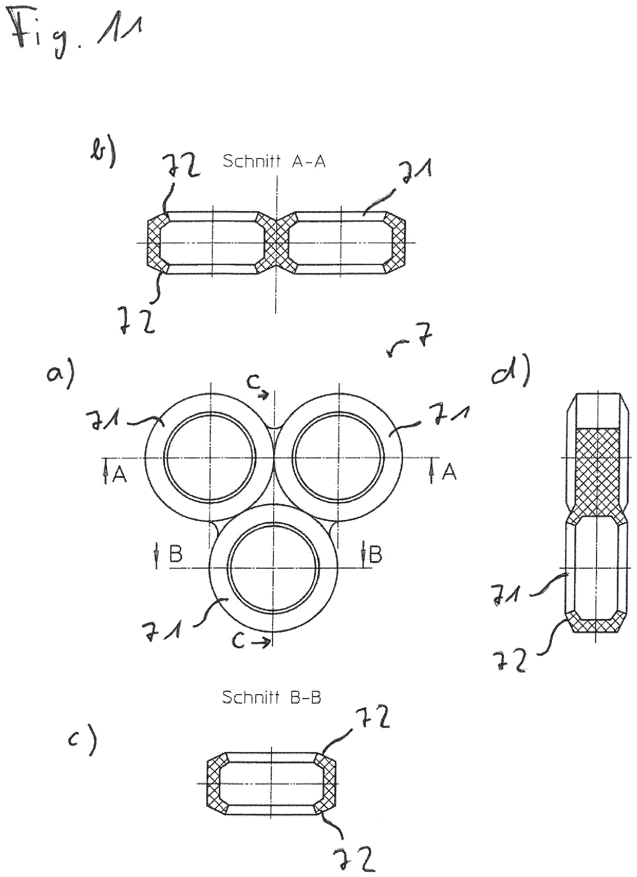

- Figur 11: die Darstellung des Lippendichtungsformteils der Mischerkartusche aus Figur 1
a) in der Draufsicht;
b) im Längsschnitt (Schnitt A-A);
c) im Längsschnitt (Schnitt B-B);
d) im Längsschnitt (Schnitt C-C);

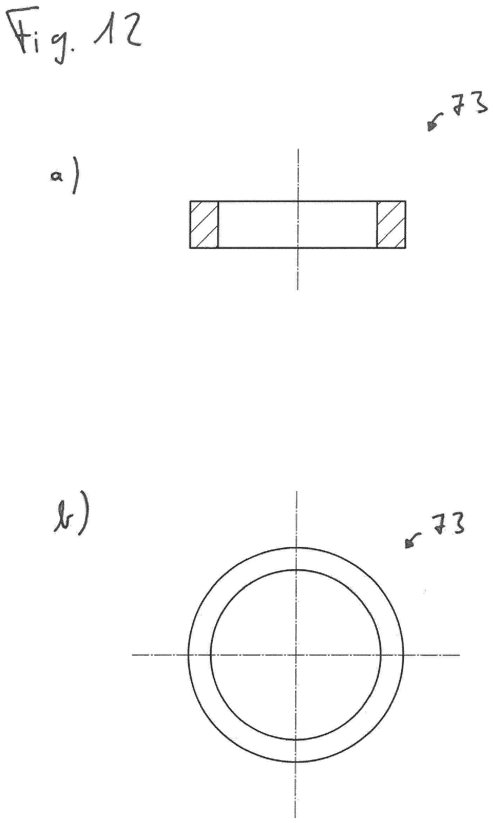

- Figur 12: die Darstellung des Stützrings des Lippendichtungsformteils der Mischerkartusche aus Figur 1
a) im Längsschnitt;
b) in der Draufsicht;

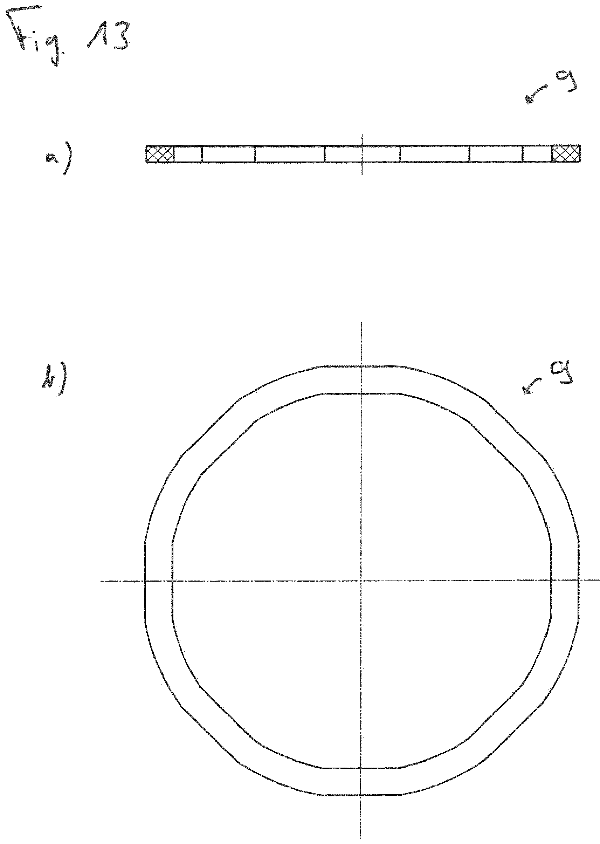

- Figur 13: die Darstellung des Gleitrings der Mischerkartusche aus Figur 1
a) im Längsschnitt
b) in der Draufsicht.

Die als Ausführungsbeispiel gewählte Einhandhebelmischerkartusche besteht im Wesentlichen aus einem Kopfstück 1, in das eine Spindel 2 axial hineinragt, die in einer drehbar gelagerten Spindelaufnahme 3 schwenkbar gelagert ist und die in ein Gleitstück 4 eingreift, das mit einer Steuerscheibe 5 verbunden ist, die mit einer Durchlassscheibe 6 korrespondiert, an die sich ein Bodenstück 8 anschließt, welches ein Dichtungsformteil 7 aufnimmt.

Das Kopfstück 1 ist hülsenartig ausgebildet und im Ausführungsbeispiel als Messingdrehteil hergestellt. An seinen dem Bodenstück 8 zugewandten endseitigen Abschnitt 10 sind in das Kopfstück 1 diametral zueinander zwei rechteckförmige Ausnehmungen 101 eingebracht, durch die zwei bogenförmige Stege 11 gebildet sind, an deren Innenseite eine Rastnut 111 eingebracht ist. An seinem den Stegen 11 gegenüberliegenden Ende weist das Kopfstück 1 einen durchmesserreduzierten Abschnitt 15 auf, in dem diametral gegenüberliegend zwei radiale Langlöcher 152 eingebracht sind, welche der Drehbegrenzung der Spindelaufnahme 3 dienen. Zwischen den Langlöchern 152 sind zwei radial umlaufende Stege 153 ausgebildet, die einen gegenüber dem durchmesserreduzierten Abschnitt 15 vergrößerten Außendurchmesser aufweisen. Auf den Stegen 153 ist jeweils eine Rastnase 151 in Form einer einen Hinterschnitt ausbildenden radialen Rastkante angeordnet. Die Rastnase 151 dient der verliersicheren Halterung des Befestigungsrings 16. Unterhalb des durchmesserreduzierten Abschnitts 15 ist an dem Kopfstück 1 innen ein Absatz 14 ausgebildet.

Auf den durchmesserreduzierten Abschnitt 15 des Kopfstücks 1 ist weiterhin ein Befestigungsring 16 aufgestülpt. Der Befestigungsring 16 weist außen umlaufend ein Außengewinde 161 zum Einschrauben in eine Armatur auf. Oberhalb des Außengewindes 161 ist der Befestigungsring 16 mit einem Außensechskant 166 versehen. Unterhalb des Außensechskants 166 ist in dem Befestigungsring 16 innen ein Absatz 165 gebildet. An seinen dem Außensechskant 166 entgegengesetzten Ende ist innen in dem Befestigungsring weiterhin umlaufend eine Nase 167 angeformt.

Die Spindel 2 ist im Ausführungsbeispiel im Wesentlichen quaderförmig ausgebildet. Etwa mittig ist an der Spindel 2 eine kreisringförmige koaxiale Anformung 21 zur Aufnahme eines - nicht dargestellten - Bedienteils angeformt. Oberhalb der Anformung 21 ist in die Spindel 2 ein bis zu der Anformung 21 geführter Schlitz 25 eingebracht. Unterhalb der Anformung 21 ist durch die Spindel 2 eine Bohrung 22 zur Aufnahme eines Achsstiftes 23 eingebracht. Endseitig ist an die Spindel 2 ein in Form einer Kugelscheibe ausgebildeter Steuerkopf 24 angeformt, der an seiner dem Gleitstück 4 zugewandten Seite abgeflacht ausgebildet ist.

Die Spindelaufnahme 3 ist als im Wesentlichen zylinderförmiges Kunststoffspritzgussteil ausgebildet. An seinem dem Gleitstück 4 zugewandten Ende ist an der Spindelaufnahme 3 ein zweistufiger Absatz 31 angeformt, dessen Kontur der Innenkontur des zweistufigen Absatzes 14 des Kopfstücks 1 entspricht, an der dieser anliegt. Der oberhalb des endseitigen ersten Absatzes 311 angeordnete, gegenüber diesem durchmesserreduziert ausgebildete zweite Absatz 312 des zweistufigen Absatzes 31 ist im Bereich der beiden Längsseitenwände des rechteckigen Querschnitts der Durchführung 33 axial schräg nach innen zulaufend ausgebildet, sodass unterhalb der Durchgangsbohrung 32 zwei konusabschnittartige Schrägen 313 gebildet sind. Der zweite Absatz 312 weist hierdurch in der Draufsicht eine hammerkopfförmige Kontur auf. Auf dem ersten Absatz 311 ist ein Gleitring 9 angeordnet. Der Gleitring 9 weist eine polygonale Außenkontur auf, die im Ausführungsbeispiel zwölfeckig ausgebildet ist. Der Außendurchmesser dieser polygonalen Außenkontur ist dabei geringfügig größer als der Außendurchmesser des ersten Absatzes 311, dessen Außendurchmesser wiederum geringfügig kleiner dimensioniert ist, als der Innendurchmesser des Absatzes 14 des Kopfstücks 1.

Oberhalb des zweitstufigen Absatzes 31 ist durch die Spindelaufnahme 3 eine radiale Durchgangsbohrung 32 zur Aufnahme des Achsstiftes 23 für die Spindel 2 eingebracht. Die Durchgangsbohrung 32 weist einen polygonalen Querschnitt auf, der im Ausführungsbeispiel als Zehneck ausgebildet ist. Axial ist durch die Spindelaufnahme 3 eine Durchführung 33 für die Spindel 2 angeformt, welche seitliche Anschläge 34 aufweist, durch die der Schwenkradius der Spindel 2 um den Achsstift 23 begrenzt ist. Die Durchführung 33 weist einen im Wesentlichen rechteckigen Querschnitt auf. An zwei eine Querseite des rechteckigen Querschnitts begrenzenden Ecken ist in die Spindelaufnahme jeweils ein einen Spalt ausbildender Schlitz 37 angeordnet, der sich in einem stumpfen Winkel zur Querseite nach außen erstreckt und der oberhalb einer durch die Mittelachse der Durchgangsbohrung 32 gedachten horizontalen Ebene endet. Ein dritter Schlitz 37 verläuft auf der Längsmittelachse des rechteckförmigen Querschnitts der Durchführung 33 von der den vorgenannten beiden Schlitzen 37 gegenüberliegend angeordneten Querseite nach außen.

Die Durchführung 33 mündet in einer im Wesentlichen quaderförmig ausgebildeten Aufnahme 35 für das Gleitstück 4. Beabstandet zu der Aufnahme 35 ist in der Spindelaufnahme 3 eine im Wesentlichen ovale Einbuchtung 36 zur Aufnahme des Führungsstiftes 44 des Gleitstücks 4 eingebracht.

Das als Kunststoffspritzgussteil ausgeführte Gleitstück 4 ist im Wesentlichen in Form einer Kreisscheibe ausgebildet, auf der ein im Wesentlichen quaderförmiges Formstück 41 angeformt ist. Das Formstück 41 ist derart ausgebildet, dass es innerhalb der Aufnahme 35 der Spindelaufnahme 3 in Längsrichtung verschiebbar und in Querrichtung geführt ist. Axial ist durch das Gleitstück 4 das Formstück 41 durchdringend ein Langloch 42 zur Aufnahme des Steuerkopfes 24 der Spindel 2 eingebracht. Seitlich des Formstücks 41 ist ein Führungsstift 44 zum Eingriff in die Einbuchtung 36 der Spindelaufnahme 3 angeformt. An seiner dem Formstück 41 entgegen gerichteten Unterseite sind an dem Gleitstück 4 außen gegenüberliegend zwei axiale Stege 43 zur Aufnahme der Steuerscheibe 5 angeformt. Weiterhin ist an der Unterseite ein Paßstift 45 zum Eingriff in die Paßbohrung 53 der Steuerscheibe 5 angeformt, wodurch eine lagegerechte Orientierung der Steuerscheibe 5 bei der Montage gewährleistet ist.

Die Steuerscheibe 5 ist oval ausgebildet und als Keramikteil hergestellt. An ihrer der Durchlassscheibe 6 zugewandten Seite weist die Steuerscheibe eine mittig angeordnete, eiförmige Einbuchtung 51 auf. Auf ihrer der Einbuchtung 51 entgegen gesetzten Oberseite sind in der Steuerscheibe 5 diametral zueinander außen zwei Ausnehmungen 52 zur Aufnahme der Stege 23 des Gleitstücks 4 eingebracht. Weiterhin ist in der Steuerscheibe 5 an ihrer dem Gleitstück 4 zugewandten Seite eine Passbohrung 53 eingebracht. Über die Ausnehmungen 52 sowie die Paßbohrung 53 ist die Steuerscheibe 5 mit dem Gleitstück 4 formschlüssig verbunden.

Die Durchlassscheibe 6 ist ebenfalls als Keramikteil ausgeführt. Durch die Durchlassscheibe 6 sind zwei Einlasskanäle 61 für kaltes bzw. warmes Wasser sowie ein relativ zu diesen vergrößert ausgebildeter Auslasskanal 62 für das Mischwasser eingebracht. Die Einlasskanäle 61 sowie der Auslasskanal 62 sind schräg zur Durchlassscheibe 6 durch diese hindurch geführt. Seitlich sind an der Durchlassscheibe 6 versetzt zueinander drei Aussparungen 63 zur formschlüssigen Verbindung mit dem Bodenstück 8 eingebracht.

Das Dichtungsformteil 7 ist im Ausführungsbeispiel aus Gummi hergestellt. Es ist im Wesentlichen durch drei Ringe 71 gebildet, die jeweils an den beiden übrigen Ringen 71 angeformt sind, sodass eine kleeblattartige Kontur gebildet ist. An den Ringen 71 des Dichtungsformteils 7 sind an deren Oberseite sowie an deren Unterseite jeweils Dichtlippen 72 angeformt. Zur Formstabilisierung sind die Ringe 71 jeweils mit einem Stützring 73 versehen, welche zwischen den Dichtlippen 72 der Ringe 71 angeordnet ist.

Das Bodenstück 8 ist Wesentlichen zylinderförmig ausgebildet. Mittig ist in dem Bodenstück 8 eine kleeblattförmige Aufnahme für das Dichtungsformteil 7 eingebracht.

Umlaufend der Aufnahme 81 sind beabstandet zueinander drei Stege 82 zur drehfesten Aufnahme der Durchlassscheibe 6 angeformt. Die Stege 82 greifen in die Aussparungen 63 der Durchlassscheibe 6 ein. Zur Verbesserung des Formschlusses sind an zwei Stegen 82 Nasen 821 abgeformt, welche in hierzu korrespondierende Aussparungen 63 der Durchlassscheibe 6 eingreifen. Seitlich sind an dem Bodenstück 8 diametral zueinander zwei Absätze 83 zum Eingriff in die Ausnehmungen 101 des endseitigen Abschnitts 10 des Kopfstücks 1 angeformt. An seiner den Stegen 82 gegenüberliegenden Unterseite sind an dem Bodenstück 8 weiterhin zwei axiale Positionierstifte 84 angeformt. Die Positionierstifte 84 dienen der Positionierung der Einhandhebelmischerkartusche in einer - nicht dargestellten - Armatur, welche hierzu mit entsprechenden Positionierbohrungen versehen ist. Umlaufend sind an dem Bodenstück 8 Rastnasen 85 angeformt, welche eine Rastverbindung zwischen dem Bodenstück 8 und dem Kopfstück 1 ermöglichen. Die Rastnasen 85 greifen in die Rastnut 111 der bogenförmigen Stege 11 des Kopfstücks 1 ein.

Im montierten Zustand ist der Befestigungsring 16 auf den durchmesserreduzierten Abschnitt 15 des Kopfstücks 1 übergestülpt, wobei die Rastnase 151 bei Passieren der umlaufenden Nase 167 des Befestigungsrings 16 elastisch nach innen gezwängt wird. Nach Passieren der Nase 167 des Befestigungsrings 116 nimmt die Rastnase 151 des durchmesserreduzierten Abschnitts 15 des Kopfstücks 1 ihre ursprüngliche Position wieder ein. Der Befestigungsring 16 ist somit verliersicher an dem Kopfstück 1 gehalten. Das Einschrauben des Befestigungsrings 16 in eine - nicht dargestellte - Armatur erfolgt über den Außensechskant 166.

## Patentansprüche

1. Einhandhebelkartusche, umfassend eine Spindel (2), eine Spindelaufnahme (3), ein Kopfstück (1), das ein Bodenstück (8) aufnimmt, sowie eine Scheibensteuerung mit einer Steuerscheibe (5), welche über die in der Spindelaufnahme (3) drehbar und/ oder schwenkbar gelagerte Spindel (2) drehbar und/ oder verschiebbar angeordnet ist, wobei die Spindelaufnahme aus einem von dem Kopfstück (1) verschiedenen Material hergestellt ist und eine Durchführung (33) für die Spindel (2) aufweist, **dadurch gekennzeichnet, dass** in die Spindelaufnahme (3) im Bereich der Durchführung (33) wenigstens ein Schlitz (37) eingebracht ist, wodurch die Innenkontur der Durchführung (33) in einem endseitigen Abschnitt der Spindelaufnahme (3) unterbrochen ist, wobei die Durchführung (33) zumindest an dem der Steuerscheibe (5) abgewandten Ende der Spindelaufnahme (3) einen rechteckigen Querschnitt aufweist, wobei die Innenkontur des rechteckigen Querschnitts der Durchführung (33) bereichsweise durch drei der Schlitze (37) unterbrochen ist.

2. Einhandhebelkartusche nach Anspruch 1, **dadurch gekennzeichnet, dass** die Spindel (2) über eine Achse (23) mit der Spindelaufnahme (3) verbunden ist, wobei der wenigstens eine Schlitz (37) nicht über eine durch diese Achse (23) geführte gedachte horizontale Ebene hinausgeht.

3. Einhandhebelkartusche nach Anspruch 1 oder 2, **dadurch gekennzeichnet, dass** die Spindelaufnahme (3) als im Wesentlichen zylinderförmiges Kunststoffspritzgussteil ausgebildet ist.

4. Einhandhebelkartusche nach einem der vorgenannten Ansprüche, **dadurch gekennzeichnet, dass** an wenigstens zwei Ecken des rechteckigen Querschnitts der Durchführung (33) jeweils einer der Schlitze (37) mündet.

5. Einhandhebelkartusche nach einem der vorgenannten Ansprüche, **dadurch gekennzeichnet, dass** wenigstens ein Schlitz (37) mittig durch eine Seitenwand des rechteckigen Querschnitts der Durchführung (33) in diese mündet.

6. Einhandhebelkartusche nach einem der vorgenannten Ansprüche, **dadurch gekennzeichnet, dass** an der Spindelaufnahme (3) an ihrem der Steuerscheibe (5) zugewandten Ende ein zweistufiger Absatz (31) angeformt ist.

7. Einhandhebelkartusche nach Anspruch 6, **dadurch gekennzeichnet, dass** oberhalb des endseitigen, ersten Absatzes (311) der zu diesem durchmesserverminderte zweite Absatz (312) im Bereich der beiden Längsseitenwände des rechteckigen Querschnitts der Durchführung (33) axial schräg zulaufend ausgebildet ist.

8. Einhandhebelkartusche nach Anspruch 6 oder 7, **dadurch gekennzeichnet, dass** auf dem endseitigen ersten Absatz (311) ein Gleitring (9) mit polygonaler Außenkontur angeordnet ist, dessen Außendurchmesser gegenüber dem endseitigen ersten Absatz (311) vergrößert ausgebildet ist.

9. Einhandhebelkartusche nach einem der Ansprüche 2 bis 8, **dadurch gekennzeichnet, dass** das Kopfstück (1) an seinem dem Bodenstück (8) entgegen gesetzten Ende einen durchmesserreduzierten Abschnitt (15) aufweist, in dem diametral gegenüberliegend zwei radiale Langlöcher (152) eingebracht sind, in welche die Achse (23) eingreift.

10. Einhandhebelkartusche nach Anspruch 9, **dadurch gekennzeichnet, dass** zwischen den Langlöchern (152) zwei radial umlaufende Stege (153) angeordnet sind, die bevorzugt einen gegenüber dem durchmesserreduzierten Abschnitt (15) vergrößert ausgebildeten Außendurchmesser aufweisen.

11. Einhandhebelkartusche nach Anspruch 9, **dadurch gekennzeichnet, dass** auf den Stegen (153) jeweils wenigstens eine Rastnase (151) zur verliersicheren Halterung eines Befestigungsrings (16) angeordnet ist.

12. Einhandhebelkartusche nach Anspruch 11, **dadurch gekennzeichnet, dass** die Rastnase (151) durch eine radial verlaufende, einen Hinterschnitt ausbildende Rastkante gebildet ist.

## Claims

1. Single-hand lever cartridge, comprising a spindle (2), a spindle seat (3), a top member (1) to receive a bottom member (8) and a disk control means having a control disk (5) that is arranged so that it can be rotated and/or pivoted by means of the spindle (2), which is mounted rotatably and/or movably in the spindle seat (3), where the spindle seat is made from a material which is different from the top member (1) and incorporates a duct (33) for the spindle (2), **characterised in that** at least one slot (37) has been constructed in the spindle seat (3) in the area of the duct (33) by which slot (37) the inner contour of the duct (33) is broken in an end portion of the spindle seat (3), where the duct (33) incorporates at least at that end of the spindle seat (3) that faces away from the control disk (5) a rectangular cross-section, where the inner contour of the rectangular cross-section of the duct (33) is partly broken by three of the slots (37).

2. Single-hand lever cartridge in accordance with claim 1, **characterised in that** the spindle (2) is joined to the spindle seat (3) by an axle (23), where the at least one slot (37) does not extend beyond an imaginary horizontal plane defined by this axle (23).

3. Single-hand lever cartridge in accordance with any of claims 1 or 2, **characterised in that** the spindle seat (3) is formed as a substantially cylindrical injection plastic moulding.

4. Single-hand lever cartridge in accordance with any of the preceding claims, **characterised in that** each of the two slots (37) opens onto at least two corners of the rectangular cross-section of the duct (33).

5. Single-hand lever cartridge in accordance with any of the preceding claims, **characterised in that** at least one slot (37) passes centrally through a side wall of the rectangular cross-section of the duct (33) and opens into it.

6. Single-hand lever cartridge in accordance with any of the preceding claims, **characterised in that** a double shoulder (31) is formed at that end of the spindle seat (3) that faces towards the control disk (5).

7. Single-hand lever cartridge in accordance with claim 6, **characterised in that** the second shoulder (312), the diameter of which has been constructed smaller than that of the first shoulder (311), is in the area of the two longitudinal side-walls of the rectangular cross-section of the duct (33) and above the first end shoulder (311) constructed so as to taper axially to one side.

8. Single-hand lever cartridge in accordance with claim 6 or 7, **characterised in that** arranged on the first end shoulder (311) is a slide ring (9) which has a polygonal outer contour and has an outside diameter that is constructed so as to be larger than the first end shoulder (311).

9. Single-hand lever cartridge in accordance with any of the claims 2 to 8, **characterised in that** the top member (1) incorporates at the end that is opposite to the bottom member (8) a portion (15) the diameter of which has been constructed smaller and in which two radial slots (152) have been constructed diametrically opposite each other for the axle (23) to engage in.

10. Single-hand lever cartridge in accordance with claim 9, **characterised in that** radially disposed between the slots (152) are two projecting members (153) that preferably incorporate an outside diameter that is constructed larger than the portion (15) that has a diameter that has been constructed smaller.

11. Single-hand lever cartridge in accordance with claim 9, **characterised in that** arranged on the projecting members (153) is at least one catch (151) for the lossproof retention of a fastening ring (16).

12. Single-hand lever cartridge in accordance with claim 11, **characterised in that** the catch (151) is formed by a radially disposed catch edge constructed in the form of an indentation.

## Revendications

1. Cartouche de mitigeur monocommande comprenant une broche (2), un logement (3) de broche, une pièce têtière (1) qui reçoit une pièce de fond (8), ainsi qu'une commande par disque (5) à cet effet disposée de façon à pouvoir tourner et/ou être pivotée via la broche (2) en appui rotatif et/ou pivotant dans le logement (3) de broche, sachant que le logement de broche est fabriqué dans un matériau différent de celui de la pièce têtière (1) et présente un passage (33) pour la broche (2), **caractérisée en ce que** dans le logement (3) de broche, dans la zone du passage (33), a été ménagée au moins une fente (37) faisant que le contour intérieur du passage (33) est interrompu dans un segment terminal du logement (3) de broche, sachant que le passage (33) présente une section rectangulaire au moins à l'extrémité - ne regardant pas le disque de commande (5) - du logement (3) de broche, sachant que le contour intérieur de la section rectangulaire du passage (33) est interrompue localement par trois des fentes (37).

2. Cartouche de mitigeur monocommande selon la revendication 1, **caractérisée en ce que** la broche (2) est reliée avec le logement (3) de broche via un axe (23), sachant qu'au moins une fente (37) ne va pas au-delà d'un plan horizontal abstrait traversant cet axe (23).

3. Cartouche de mitigeur monocommande selon la revendication 1 ou 2, **caractérisée en ce que** le logement (3) de broche est configuré essentiellement comme une pièce en matière plastique injectée de forme cylindrique.

4. Cartouche de mitigeur monocommande selon l'une des revendications précédentes, **caractérisée en ce qu'**à au moins deux angles de la section rectangulaire du passage (33) aboutit respectivement l'une des fentes (37).

5. Cartouche de mitigeur monocommande selon l'une des revendications précédentes, **caractérisée en ce qu'**au moins une fente (37) traversant au milieu une paroi latérale de la section rectangulaire du passage (33) aboutit dans ce dernier.

6. Cartouche de mitigeur monocommande selon l'une des revendications précédentes, **caractérisée en ce qu'**un talon (31) à deux gradins est moulé contre le logement (3) de broche, contre son extrémité regardant le disque de commande (5).

7. Cartouche de mitigeur monocommande selon la revendication 6, **caractérisée en ce qu'**au dessus du premier gradin (311) terminal, le deuxième gradin (312) d'un diamètre inférieur au premier gradin est configuré arrivant en biais axialement dans la zone des deux parois longitudinales de la section rectangulaire du passage (33).

8. Cartouche de mitigeur monocommande selon la revendication 6 ou 7, **caractérisée en ce que** sur le premier gradin (311) terminal est disposée une bague de glissement (9) présentant un contour extérieur polygonal, dont le diamètre extérieur est configuré plus grand par rapport au premier gradin (311) terminal.

9. Cartouche de mitigeur monocommande selon l'une des revendications 2 à 8, **caractérisée en ce que** la pièce têtière (1) présente, en son extrémité opposée à la pièce de fond (8), un segment (15) d'un diamètre réduit dans lequel ont été ménagés deux trous oblongs (152) radiaux se faisant diamétralement face dans lesquels l'axe (23) engrène.

10. Cartouche de mitigeur monocommande selon la revendication 9, **caractérisée en ce qu'**entre les trous oblongs (152) sont disposées deux nervures (153) périphériques radiales qui présentent de préférence un diamètre extérieur configuré plus grand que le segment (15) à diamètre réduit.

11. Cartouche de mitigeur monocommande selon la revendication 9, **caractérisée en ce que** sur les nervures (153) est agencé chaque fois au moins un cran en saillie (151) pour retenir une bague de fixation (16) sans risque de la perdre.

12. Cartouche de mitigeur monocommande selon la revendication 11, **caractérisée en ce que** le cran en saillie (151) est formé par un cran en saillie au tracé radial et formant une contre-dépouille.
